# EUROPEAN PATENT APPLICATION

(11) **EP 4 195 347 A1**
(43) Date of publication of application: **14.06.2023**
(21) Application number: 21929449.3
(22) Date of filing: 14.10.2021
(51) Int. Cl.: H01M 10/0525, H01M 4/13, H01M 4/36

(54) **ELECTRODE PLATE, ELECTRODE ASSEMBLY, BATTERY CELL, BATTERY, AND ELECTRIC DEVICE**

(71) Applicant: Contemporary Amperex Technology Co., Limited, Jiaocheng District Ningde Fujian 352100 (CN)
(72) Inventor: CHE, Huan, Ningde, Fujian 352000 (CN); CHEN, Wei, Ningde, Fujian 352000 (CN); LI, Shisong, Ningde, Fujian 352000 (CN)
(74) Representative: Thoma, Michael
(86) International application number: PCT/CN2021/123916
(87) International publication number: WO 2023/060517

(57) **Abstract**

Embodiments of the present disclosure provide an electrode plate, an electrode assembly, a battery cell, a battery, and an electric appliance, and relate to the field of battery technology. In the above, the electrode plate comprises a current collector; and an active substance layer disposed on the surface of at least one side of the current collector, the active substance layer having a first active substance region and a second active substance region; in a preset section, the second active substance region has a sectional area of S₂, and the active substance layer has a sectional area of S, where S₂ < S; the surface, where the active substance layer is located in the current collector, is a preset surface, and the preset section is parallel to the preset surface and passes through the second active substance region; the first active substance region has a porosity of P₁, and the second active substance region has a porosity of P₂, where P₁ < P₂; and pores in the first active substance region and in the second active substance region all have a pore size ≤ 1 µm. An electrode plate having such a structure can effectively improve the infiltration efficiency of the electrode plate in the width direction.

## Description

### Technical Field

The present disclosure relates to the field of battery technology, and particularly to an electrode plate, an electrode assembly, a battery cell, a battery, and an electric appliance.

### Background Art

Batteries are widely used in electric appliances, such as mobile phones, notebook computers, electromobiles, electric automobiles, electric aircrafts, electric ships, electric toy cars, electric toy ships, electric toy aircrafts, and electric tools.

It is a common phenomenon that the infiltration efficiency of an electrode plate in the width direction (i.e., an electrode assembly in the height direction) is insufficient, which results in productivity loss of the electrode assembly during the manufacturing process, and further causes that the electrode assembly has a problem of insufficient electrolytic solution supply for the middle part during the cycling process, which affects the cycle life of the electrode assembly.

### Summary

Embodiments of the present disclosure provide an electrode plate, an electrode assembly, a battery cell, a battery, and an electric appliance, wherein the infiltration efficiency of the electrode plate in the width direction can be effectively improved.

In a first aspect, the present disclosure provides an electrode plate, comprising: a current collector, and an active substance layer disposed on the surface of at least one side of the current collector, the active substance layer having a first active substance region and a second active substance region; in a preset section, the second active substance region has a sectional area of S₂, and the active substance layer has a sectional area of S, where S₂ < S; the surface, where the active substance layer is located in the current collector, is a preset surface, and the preset section is parallel to the preset surface and passes through the second active substance region; the first active substance region has a porosity of P₁, and the second active substance region has a porosity of P₂, where P₁ < P₂; and pores in the first active substance region and in the second active substance region all have a pore size ≤ 1 µm.

In the technical solution of an embodiment of the present disclosure, the porosity of the second active substance region is greater than the porosity of the first active substance region, and by configuring a second active substance region having a relatively greater porosity, the infiltration efficiency of the active substance layer can be increased. In the preset section parallel to the preset surface, since the sectional area of the second active substance region is smaller than the sectional area of the active substance layer, that is, the second active substance region is configured to be distributed locally in the transverse section, in other words, in the width direction of the electrode plate, both a region having a relatively great porosity and a region having a relatively small porosity are present, the infiltration efficiency of the electrode plate in the width direction can be effectively improved.

In some embodiments, the difference between P₂ and P₁ ranges from 3% to 20%, optionally ranges from 7% to 15%, and further optionally ranges from 10% to 15%. In the foregoing embodiments, there is a proper difference in porosity between the second active substance region and the first active substance region, hereby reducing the amount of energy density losses of the electrode plate as much as possible, while effectively increasing the infiltration efficiency.

In some embodiments, P₁ ranges from 15% to 35%, optionally ranges from 15% to 25%, further optionally ranges from 20% to 25%; and/or P₂ ranges from 20% to 50%, optionally ranges from 20% to 40%, further optionally ranges from 25% to 40%. In the foregoing embodiments, a specific porosity is selected for the second active substance region and the first active substance region, wherein the electrode plate is controlled to have a proper energy density, while the infiltration efficiency is ensured.

In some embodiments, the first active substance region has a compaction density of C₁ and the second active substance region has a compaction density of C₂, and any one of following conditions (a) to (c) is satisfied: (a) both the first active substance region and the second active substance region have an active substance of lithium iron phosphate, and the ratio of C₁ to C₂ ranges from 1.02 to 1.7; optionally, C₁ ranges from 2.3 g/cm³ to 2.7 g/cm³, and C₂ ranges from 1.6 g/cm³ to 2.2 g/cm³; (b) both the first active substance region and the second active substance region have an active substance of a ternary cathode material, and the ratio of C₁ to C₂ ranges from 1.02 to 1.5; optionally, C₁ ranges from 3.1 g/cm³ to 3.7 g/cm³, and C₂ ranges from 2.5 g/cm³ to 3 g/cm³; (c) both the first active substance region and the second active substance region have an active substance of graphite, and the ratio of C₁ to C₂ ranges from 1.1 to 1.7; optionally, C₁ ranges from 1.3 g/cm³ to 1.8 g/cm³, and C₂ ranges from 1.1 g/cm³ to 1.5 g/cm³. In the foregoing embodiments, corresponding specific compaction densities are selected for different active substances, hereby ensuring that the second active substance region and the first active substance region have a proper porosity and a difference in porosity, wherein the electrode plate is controlled to have a proper energy density, while the infiltration efficiency is effectively increased.

In some embodiments, at least one of following conditions (d) to (e) is satisfied: (d) S × 2.5% ≤ S₂ ≤ S × 30%; and (e) the active substance layer has a thickness of h, and the second active substance region has a thickness of h₂, where h × 30% ≤ h₂ ≤ h × 100%. In the foregoing embodiments, a specific area proportion and/or thickness proportion is satisfied in the second active substance region, such that the second active substance region has a proper distribution proportion, wherein the electrode plate is controlled to have a proper energy density, while the infiltration efficiency is ensured.

In some embodiments, in the width direction of the electrode plate, the active substance layer has a size of M, and following condition (f) is satisfied: (f) in the width direction of the electrode plate, the minimum distance between the second active substance region and the center of the active substance layer is d₁, where d₁ ≤ M × 35%. In the foregoing embodiments, in the width direction of the electrode plate, the minimum distance between the second active substance region and the center of the active substance layer is smaller than or equal to a specific standard, such that the second active substance region has a proper distribution location, hereby effectively increasing the infiltration efficiency.

In some embodiments, in the width direction of the electrode plate, the active substance layer has a size of M, and following condition (g) is satisfied: (g) in the width direction of the electrode plate, the minimum distance between the second active substance region and an edge of the active substance layer is d₂, where d₂ ≤ M × 20%. In the foregoing embodiments, in the width direction of the electrode plate, the minimum distance between the second active substance region and an edge of the active substance layer is smaller than or equal to a specific standard, such that the second active substance region has a proper distribution location, hereby effectively increasing the infiltration efficiency.

In some embodiments, in the width direction of the electrode plate, the active substance layer has a size of M; there are multiple second active substance regions, and the multiple second active substance regions are distributed at intervals along the length direction of the electrode plate; and at least one of following conditions (h) to (i) is satisfied: (h) in the width direction of the electrode plate, the minimum distance between the second active substance region and the center of the active substance layer is d₁, where d₁ ≤ M × 10%; and (i) in the width direction of the electrode plate, the distance between both ends of each of the second active substance regions is d₃, where d₃ ≥ M × 30%. In the foregoing embodiments, in the width direction of the electrode plate, the minimum distance between the second active substance region and the center of the active substance layer is controlled to be smaller than or equal to a specific standard, and/or the distance between both ends of the second active substance region is controlled to be greater than or equal to a specific standard, such that the multiple second active substance regions distributed at intervals along the length direction of the electrode plate have proper distribution locations, hereby effectively increasing the infiltration efficiency.

In some embodiments, in the width direction of the electrode plate, the active substance layer has a size of M; and there are multiple second active substance regions, and the multiple second active substance regions are distributed at intervals along the width direction of the electrode plate; in the width direction of the electrode plate, the spacing between two adjacent second active substance regions is d₄, where d₄ ≤ M × 20%. In the foregoing embodiments, in the width direction of the electrode plate, the distance between two adjacent second active substance regions is controlled to be smaller than or equal to a specific standard, such that the multiple second active substance regions distributed at intervals along the width direction of the electrode plate have proper distribution locations, hereby effectively increasing the infiltration efficiency.

In some embodiments, the active substance layer has a thickness of h, and the second active substance region has a thickness of h₂, where h × 30% ≤ h₂ ≤ h × 60%; and the distance from the second active substance region to the surface of the active substance layer is d₅, and the distance from the active substance layer to the preset surface is d₆, where d₅ < d₆. In the foregoing embodiments, the second active substance region occupies partial region of the active substance layer in the thickness direction, wherein the electrode plate is controlled to have a proper energy density, while the infiltration efficiency is effectively increased. Meanwhile, it is controlled that the second active substance region is arranged to be closer to the surface of the active substance layer, and the function of the second active substance for improving the infiltration efficiency can hereby be better exploited.

In a second aspect, the present disclosure provides an electrode assembly, comprising: a positive electrode plate, a separator, and a negative electrode plate, wherein at least one from the positive electrode plate and the negative electrode plate is an electrode plate in the foregoing embodiments.

In some embodiments, the electrode assembly is of a winding structure, the width direction of the electrode plate is identical with the axial direction of the electrode assembly, and the length direction of the electrode plate is identical with the winding direction of the electrode assembly; and the electrode assembly has a diameter of d, and in the winding direction of the electrode assembly, each region having an arc length of πd/4 has at least a part of the second active substance region. In the foregoing embodiments, each region having an arc length of πd/4 has at least a part of the second active substance region, such that the distribution spacing of the second active substance regions in the winding direction of the electrode assembly is smaller than or equal to a specific standard, hereby ensuring a relatively good infiltration effect of the electrode assembly.

In a third aspect, the present disclosure provides a battery cell, comprising a housing and an electrode assembly in the foregoing embodiments; and the electrode assembly is accommodated in the housing.

In a fourth aspect, the present disclosure provides a battery, comprising a box body and a battery cell in the foregoing embodiments; and the battery cell is accommodated in the box body.

In a fifth aspect, the present disclosure provides an electric appliance, comprising a battery in the foregoing embodiments.

### Brief Description of Drawings

In order to more clearly describe the technical solutions of the embodiments of the present disclosure, the drawings required to be used in the embodiments will be simply presented below; and it shall be understood that the following drawings merely show certain embodiments of the present disclosure, and thus should not be deemed as limiting the scope thereof, and for a person ordinarily skilled in the art, further relevant drawings could be obtained according to these drawings without using any creative efforts.
Fig. 1 is a structural schematic view of a vehicle provided in some embodiments of the present disclosure;
Fig. 2 is an exploded view of a battery provided in some embodiments of the present disclosure;
Fig. 3 is an exploded view of the battery cell as shown in Fig. 2;
Fig. 4 is a structural schematic view of an electrode assembly partially unfolded along the winding direction provided in some embodiments of the present disclosure;
Fig. 5 is a first structural schematic view of an electrode plate provided in some embodiments of the present disclosure in a longitudinal section;
Fig. 6 is a first structural schematic view of an electrode plate provided in some embodiments of the present disclosure in a transverse section;
Fig. 7 is a second structural schematic view of an electrode plate provided in some embodiments of the present disclosure in a transverse section;
Fig. 8 is a third structural schematic view of an electrode plate provided in some embodiments of the present disclosure in a transverse section;
Fig. 9 is a fourth structural schematic view of an electrode plate provided in some embodiments of the present disclosure in a transverse section;
Fig. 10 is a fifth structural schematic view of an electrode plate provided in some embodiments of the present disclosure in a transverse section;
Fig. 11 is a second structural schematic view of an electrode plate provided in some embodiments of the present disclosure in a longitudinal section;
Fig. 12 is a third structural schematic view of an electrode plate provided in some embodiments of the present disclosure in a longitudinal section;
Fig. 13 is a fourth structural schematic view of an electrode plate provided in some embodiments of the present disclosure in a longitudinal section;
Fig. 14 shows an electrode assembly containing an electrode plate as shown in Fig. 6;
Fig. 15 shows an electrode assembly containing an electrode plate as shown in Fig. 8;
Fig. 16 shows an electrode assembly containing an electrode plate as shown in Fig. 9; and
Fig. 17 shows an electrode assembly containing an electrode plate as shown in Fig. 10.

Reference signs in Detailed Description of Embodiments are as follows:
vehicle 1000;
battery 100, controller 200, motor 300;
box body 10, first part 11, second part 12, accommodating space 13;
battery cell 20, housing 21, electrode assembly 22, electrode terminal 23, decompression structure 24;
shell 211, cover body 212, sealed space 213, positive electrode plate 221, negative electrode plate 222, separator 223;
current collector 2211, active substance layer 2212; lug structure 2213, insulation coating 2214;
preset surface 2211a, first active substance region 2212a, second active substance region 2212b, preset section 2212c;
winding direction A, axial direction B, width direction C, and length direction D.

### Detailed Description of Embodiments

In following contents, the embodiments of technical solutions of the present disclosure will be described in detail in combination with accompanying drawings. Following embodiments merely aim to more clearly describe the technical solutions of the present disclosure, thus are only exemplary, and cannot be used for limiting the scope of protection of the present disclosure.

Unless otherwise defined, all technical and scientific terms as used herein have same meanings as commonly interpreted by a technician belonging to the technical field of the present disclosure; the terms as used herein are merely used for the purpose of depicting specific embodiments, instead of being intended to limit the present disclosure; and terms "comprise" and "have" as well as any variants thereof in the description, in the claims, and in the foregoing brief description of drawings of the present disclosure are intended to cover the non-exclusive inclusion.

In the depiction of the embodiments of the present disclosure, technical terms such as "first", "second" or the like are merely used for distinguishing different objects, and cannot be construed as indicating or implying to have importance in relativity or implicitly specifying the amount, specific order or primary and secondary relation of the indicated technical feature.

In the depiction of the embodiments of the present disclosure, the term "multiple" means two or more, unless otherwise explicitly specifically defined.

In the depiction of the embodiments of the present disclosure, the term "and/or" indicates only an association relationship for depicting associated objects, and represents that there may be three kinds of relationships, for example, A and/or B may represent three circumstances, that is, A is present alone, A and B are present simultaneously, and B is present alone. In addition, the character "/" in the context generally represents that the former and latter associated objects have an "or" relationship.

Reference herein to an "embodiment" means that a specific feature, structure or characteristic described in combination with an embodiment may be contained in at least one embodiment of the present disclosure. The appearance of this phrase at respective positions in the description does not necessarily refer to the same embodiment, nor an independent or alternative embodiment that is mutually exclusive of other embodiments. It could be explicitly and implicitly understandable for a person skilled in the art that embodiments described in the context may be combined with other embodiments.

In the embodiments of the present disclosure, same reference signs represent same components, and for conciseness, detailed description for the same component is omitted in different embodiments. It should be understood that dimensions, such as thickness, length, width or the like, of various components in the embodiments of the present disclosure that are shown in the accompanying drawings and dimensions of an integrated device, such as entire thickness, length, width or the like, are merely exemplary descriptions and should not constitute any limitation to the present disclosure.

In the present disclosure, battery cells may include lithium-ion secondary batteries, lithium-ion primary batteries, lithium sulfur batteries, sodium lithium ion batteries, sodium-ion batteries, or magnesium-ion batteries or the like, to which no limitation is made in the embodiments of the present disclosure. A battery cell may be present in the form of a cylinder, a flat body, a cuboid or in another form, to which no limitation is made in the embodiments of the present disclosure either. Battery cells are generally divided into three kinds according to the packaging mode, i.e.: columnar battery cells, quadrate battery cells, and pouch battery cells, to which no limitation is made in the embodiments of the present disclosure either.

A battery cell comprises an electrode assembly and an electrolytic solution, and the electrode assembly consists of a positive electrode plate, a negative electrode plate, and a separator. The battery cell works mainly relying on the movement of metal ions between the positive electrode plate and the negative electrode plate. The positive electrode plate includes a positive electrode current collector and a positive electrode active substance layer, the positive electrode active substance layer is coated on the surface of the positive electrode current collector, and a positive electrode current collector without a coated positive electrode active substance layer protrudes from the positive electrode current collector with a coated positive electrode active substance layer and the positive electrode current collector without a coated positive electrode active substance layer is called as positive electrode lug. Taking a lithium-ion battery as an example, the material for the positive electrode current collector may be aluminum, and the positive electrode active substance may be lithium cobalt oxide, lithium iron phosphate, ternary lithium, or lithium manganate or the like. The negative electrode plate includes a negative electrode current collector and a negative electrode active substance layer, the negative electrode active substance layer is coated on the surface of the negative electrode current collector, and a negative electrode current collector without a coated negative electrode active substance layer protrudes from the negative electrode current collector with a coated negative electrode active substance layer and the negative electrode current collector without a coated negative electrode active substance layer is called as negative electrode lug. The material for the negative electrode current collector may be copper, and the negative electrode active substance may be carbon or silicon or the like. In order to ensure that no fusing occurs by heavy current conveyance, there are multiple positive electrode lugs, which are stacked together, and there are multiple negative electrode lugs, which are stacked together. The separator may be made of PP (polypropylene) or PE (polyethylene) or the like. Furthermore, the electrode assembly may be of a winding structure, or a laminated structure, but the embodiments of the present disclosure are not limited thereto.

In the present disclosure, a battery refers to a single physical module comprising one or more battery cells for providing higher voltage and capacity. For example, the battery mentioned in the present disclosure may comprise a battery module or a battery pack or the like. The battery generally comprises a box body for packaging one or more battery cells. The box body can avoid influences on the charging or discharging of the battery cell caused by a liquid or other foreign bodies.

The inventors have discovered that in recent years, with the rapid development of electronic products and electric automobiles, requirements for heavy current charging and discharging of battery cells are becoming higher and higher. In the electrode assembly of the battery cell, the electrode used has reduced porosity of the active substance layer after being rolled, resulting in deteriorated ionic conduction and degraded infiltration performance, causing that the electrolytic solution in the battery cell has difficulty in reaching the middle region of the electrode plate in the width direction from both ends of the electrode plate in the width direction, and accordingly causing an insufficient infiltration efficiency of the electrode plate in the width direction (in a battery, that is, the electrode assembly in the height direction).

The inventors have noticed that the foregoing problem can be improved by not coating an active material in the middle part of the surface of the current collector in the width direction and punching the same. However, the region with no active material coated suffers great losses in capacity, causing significant reduction in the energy density of the electrode plate; the strength of the region with no active material coated is greatly reduced, which undermines the stress structure of the electrode plate and the electrode assembly, causing that overall torsion of the structure would easily occur when the electrode assembly is under stress, and the separator would even potentially be pierced due to twisted structure; and the process complexity would also be increased due to punching at the region with no active material coated, and there is a risk of fracturing the current collector.

The inventors have also discovered through research that when a complete active substance layer is coated on the surface of the current collector, the porosity of the active substance layer is locally increased in a transverse section through a local pore regulation strategy, that is to say, in the width direction of the electrode plate, both a region having a relatively great porosity and a region having a relatively small porosity are present, thus, the infiltration efficiency of the electrode plate in the width direction can be effectively improved. Moreover, the foregoing local pore regulation strategy can effectively overcome or improve problems caused by non-coating of an active material and punching.

In view of this, an embodiment of the present disclosure provides a technical solution, in which the active substance layer is provided with a first active substance region and a second active substance region, the second active substance region is regulated to have a greater porosity with respect to the first active substance region, and the second active substance region is configured to be locally distributed in the transverse section. In the foregoing technical solution, the capacity loss can be reduced, and the decrease range of the energy density can be reduced accordingly; the completeness of the active substance layer is maintained, and the stress structure of the electrode plate and the electrode assembly is not undermined; the manufacturing process is simple and would not increase costs of the electrode plate, wherein the fracture of the current collector due to punching is avoided and the safety is ensured accordingly, and the adaptability to electrode assemblies of various structures is good; and the infiltration efficiency of the electrode plate in the width direction is effectively improved, the productivity of the electrode assembly can be increased, and the problem of insufficient electrolytic solution supply for the middle part existing in the cycling process of the electrode assembly can be improved, hereby improving the cycle life of the electrode assembly.

The technical solution described in the embodiment of the present disclosure is suitable for electrode assemblies, battery cells using the electrode assemblies, batteries using the battery cells, and electric appliances using the batteries.

In the present disclosure, electric appliances may have various forms, e.g., may be mobile phones, portable devices, notebook computers, electromobiles, electric automobiles, ships, spacecraft, electric toys, and electric tools etc., for example, spacecraft include airplanes, rockets, space planes, and spaceships and the like; electric toys include stationary or mobile electric toys, e.g., game consoles, electric automobile toys, electric ship toys, and electric aircraft toys etc.; electric tools include electric metal-cutting tools, electric abrasive tools, electric assembly tools, and electric tools for railway, e.g., electric drills, electric grinders, electric wrenches, electric screwdrivers, electric hammers, electric impact drills, concrete vibrators, and electric planers.

In order to facilitate description, following embodiments are described with a vehicle as an example of electric appliance.

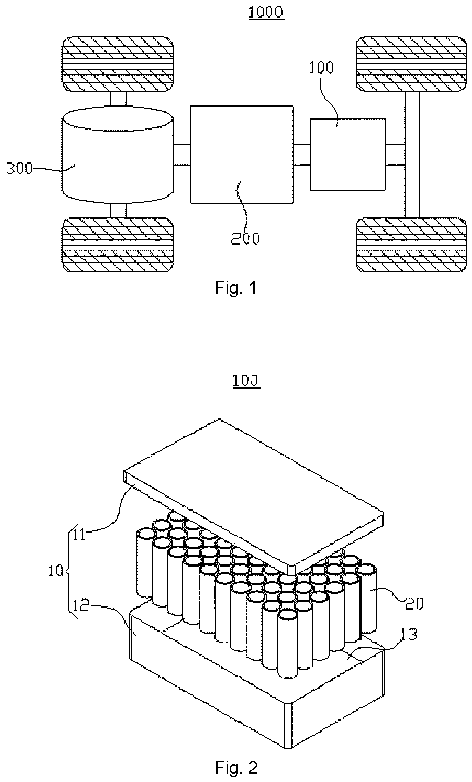

Referring to Fig. 1, Fig. 1 is a structural schematic view of a vehicle 1000 provided in some embodiments of the present disclosure, a battery 100 is provided in the vehicle 1000, and the battery 100 can be arranged at the bottom or the front part or the tail part of the vehicle 1000. The battery 100 can be used for power supply of the vehicle 1000, for example, the battery 100 can serve as an operating power source of the vehicle 1000.

The vehicle 1000 can further comprise a controller 200 and a motor 300, and the controller 200 is used for controlling the battery 100 to provide power supply for the motor 300, e.g., for electricity demands of the working of the vehicle 1000 when being started, navigated, and driven.

In some embodiments of the present disclosure, the battery 100 can not only serve as an operating power source of the vehicle 1000, but also serve as a driving power source of the vehicle 1000, which replaces or partially replaces fuel oil or natural gas and provides a driving power for the vehicle 1000.

Referring to Fig. 2, Fig. 2 is an exploded view of a battery 100 provided in some embodiments of the present disclosure, and the battery 100 can comprise a box body 10 and a battery cell 20, which is accommodated in the box body 10.

The box body 10 is used for accommodating the battery cell 20, and the box body 10 may have various structures. In some embodiments, the box body 10 can include a first part 11 and a second part 12, wherein the first part 11 and the second part 12 are covered with each other, and the first part 11 and the second part 12 commonly define an accommodating space 13 for accommodating the battery cell 20. The second part 12 may be a hollow structure with an open end, while the first part 11 is a plate-like structure, and the first part 11 is covered on the open side of the second part 12, so as to form a box body 10 having an accommodating space 13; both the first part 11 and the second part 12 may also be hollow structures with an open side, and the open side of the first part 11 is covered with the open side of the second part 12, so as to form a box body 10 having an accommodating space 13. Of course, the first part 11 and the second part 12 can be in various forms, for example, in the form of a cylinder, a cuboid or the like.

In order to increase the sealing performance of the connection between the first part 11 and the second part 12, a sealing element (not shown in the figure), such as a sealant, a sealing ring etc., may be provided between the first part 11 and the second part 12.

In the battery 100, there may be one or more battery cells 20. If there are multiple battery cells 20, the multiple battery cells 20 may be connected in series or in parallel or in series and parallel, wherein the connection in series and parallel means that among the multiple battery cells 20, there are serially connected battery cells and battery cells connected in parallel. The battery cell 20 may be cylindrical, cuboid, or in other forms. In Fig. 2, exemplarily, the battery cells 20 are cylindrical.

The multiple battery cells 20 may be connected directly in series or in parallel or in series and parallel, and the entirety composed of the multiple battery cells 20 is then accommodated in the box body 10. It is also possible that the multiple battery cells 20 are firstly connected in series or in parallel or in series and parallel to form a battery module, and multiple battery modules are then connected in series or in parallel or in series and parallel to form an entity and are accommodated in the box body 10.

The multiple battery cells 20 can be in electric connection with each other via a busbar component (not shown in the figure), so as to realize parallel connection or serial connection or serial-parallel connection of the multiple battery cells 20.

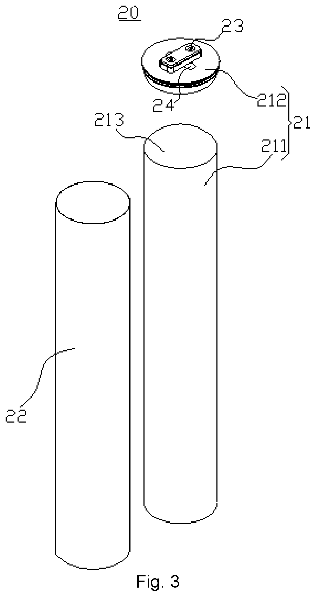

Referring to Fig. 3, Fig. 3 is an exploded view of the battery cell 20 as shown in Fig. 2. The battery cell 20 can comprise a housing 21 and an electrode assembly 22, which is accommodated in the housing 21.

In some embodiments, the housing 21 may also be used for accommodating an electrolyte, such as an electrolytic solution. The housing 21 may have various structural forms.

In some embodiments, the housing 21 may comprise a shell 211 and a cover body 212, wherein the shell 211 is a hollow structure with an open side, and the cover body 212 is covered at the opening of the shell 211 and forms hereby a sealed connection, so as to form a sealed space 213 for accommodating the electrode assembly 22 and the electrolyte.

When assembling the battery cell 20, the electrode assembly 22 can firstly be placed into the shell 211, and the shell 211 is filled with an electrolyte, and then the cover body 212 is covered on the opening of the shell 211.

The shell 211 may have various forms, e.g., a cylindrical form, a cuboid form or the like. The form of the shell 211 can be determined according to the specific form of the electrode assembly 22. For example, if the electrode assembly 22 is a cylindrical structure, a cylindrical shell can be selected; if the electrode assembly 22 is a cuboid structure, a cuboid shell can be selected. Of course, the cover body 212 may also have various structures, for example, the cover body 212 is a plate-like structure, a hollow structure with an open end or the like. Exemplarily, in Fig. 3, the shell 211 is a cylindrical structure, the cover body 212 is a plate-like structure, the electrode assembly 22 is a cylindrical structure, the electrode assembly 22 is accommodated in the shell 211, and the cover body 212 is covered on the opening at the top of the shell 211.

In some embodiments, the battery cell 20 may further comprise an electrode terminal 23, and the electrode terminal 23 is mounted on the cover body 212. The electrode terminal 23 is in electric connection with the electrode assembly 22, so as to output electric energy produced by the battery cell 20. Exemplarily, the electrode terminal 23 and the electrode assembly 22 can be in electric connection with each other via an adapter plate (not shown in the figure).

In some embodiments, the battery cell 20 may further comprise a decompression structure 24, which is used for releasing pressure inside the battery cell 20 when the internal pressure or temperature of the battery cell 20 reaches a preset value.

Exemplarily, the decompression structure 24 may be, for example, an explosion-proof valve, an explosion rupture disc, an air valve, a decompression valve, a safety valve, or a similar component.

In the following contents, the specific structure of the electrode assembly 22 will be described in detail with reference to the accompanying drawings. In order to facilitate description, an electrode assembly 22 having a winding structure is taken as an example for description.

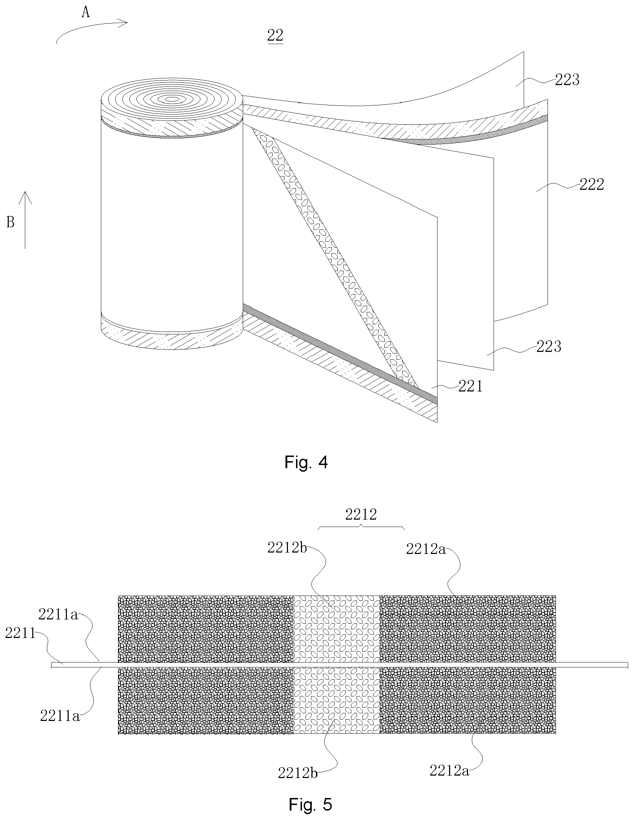

Referring to Fig. 4, the electrode assembly 22 comprises a positive electrode plate 221, a separator 223, and a negative electrode plate 222. The positive electrode plate 221, the separator 223, and the negative electrode plate 222 are successively stacked in the thickness direction of the separator 223, and are wound along a winding direction A to form a winding structure.

In the above, the winding direction A is just a direction for circumferentially winding the positive electrode plate 221, the separator 223, and the negative electrode plate 222 from inside to outside, that is, the direction A as shown in Fig. 4. The height direction of the electrode assembly 22 is just the axial direction B of the winding structure, that is, the direction B as shown in Fig. 4.

The winding structure may be present in the form of a cylinder or a flat body. Exemplarily, as shown in Fig. 4, the winding structure is present in the form of a cylinder.

In order to facilitate description, the structure of the electrode plate will be described in the following contents, and the electrode plate can refer to the positive electrode plate 221, and can also refer to the negative electrode plate 222.

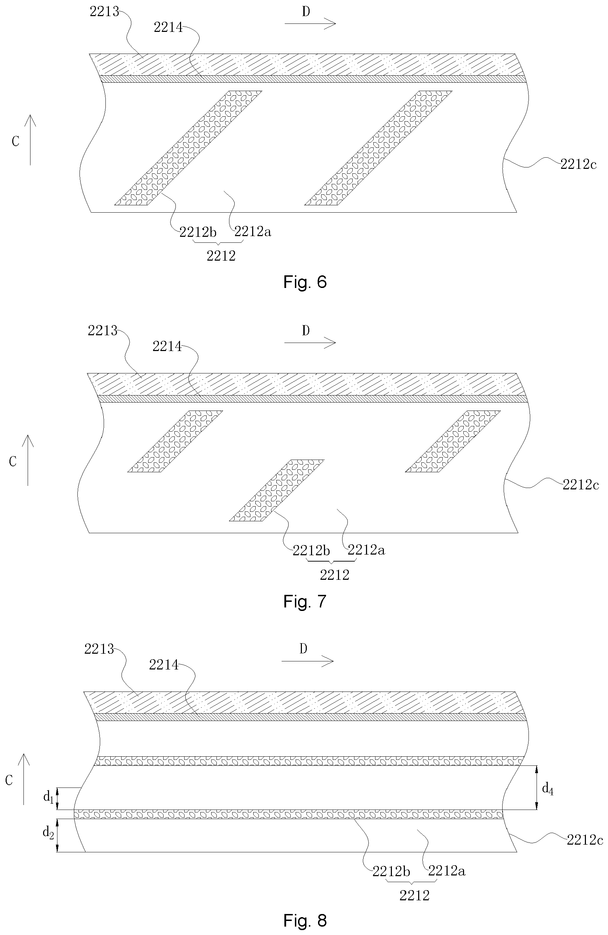

Referring to Figs. 5 and 6, the electrode plate comprises a current collector 2211 and an active substance layer 2212, and the active substance layer 2212 is disposed on the surface of at least one side of the current collector 2211. The active substance layer 2212 has a first active substance region 2212a and a second active substance region 2212b; in a preset section 2212c, the second active substance region 2212b has a sectional area of S₂, and the active substance layer 2212 has a sectional area of S, where S₂ < S; the surface, where the active substance layer 2212 is located in the current collector 2211, is a preset surface 2211a, and the preset section 2212c is parallel to the preset surface 2211a and passes through the second active substance region 2212b; the first active substance region 2212a has a porosity of P₁, and the second active substance region 2212b has a porosity of P₂, where P₁ < P₂; and pores in the first active substance region 2212a and in the second active substance region 2212b all have a pore size ≤ 1 µm.

The region of the current collector 2211 without an active substance layer 2212 is a lug region, and the current collector 2211 in the lug region serves as a lug structure 2213. In the preset surface 2211a, an insulation coating 2214 is optionally provided, and this insulation coating 2214 is located at the edge of the active substance layer 2212 close to the side where the lug region is located.

The pores in the first active substance region 2212a and in the second active substance region 2212b all have a pore size ≤ 1 µm, the pore size of the pores in the first active substance region 2212a and in the second active substance region 2212b ranges e.g. from 0.05 µm to 1 µm, and this pore size matches the pore size of the pore structure formed by rolling the active substance, such that the first active substance region 2212a and the second active substance region 2212b can be formed through rolling. In an embodiment of the present disclosure, the first active substance region 2212a and the second active substance region 2212b have a structure formed by rolling.

In the figures, the transverse section refers to a section parallel to the preset surface 2211a; and a longitudinal section refers to a section perpendicular to the preset surface 2211a.

As shown in the figures, the direction C is the width direction C of the electrode plate, which is identical with the axial direction B of the winding structure in the electrode assembly 22. The direction D is the length direction D of the electrode plate, which is identical with the arc length direction of the winding structure in the electrode assembly 22.

In the embodiments of the present disclosure, the amount of the second active substance regions 2212b is not defined, there may be only one second active substance region, or may be multiple second active substance regions distributed at intervals.

The form of the second active substance region 2212b in the transverse section is not defined in the embodiments of the present disclosure, and it may be an elongated region, a square region, a circular region, or a region in another regular form, or may also be a region having an irregular form.

Figs. 6 to 10 show an example, in which the second active substance region 2212b is an elongated region, and the length extension direction of the elongated region is not defined.

As shown in Figs. 6 and 7, the length extension direction of the second active substance region 2212b is arranged to be inclined with respect to an edge of the electrode plate, and the length extension direction of the second active substance region 2212b is between the width direction C of the electrode plate and the length direction D of the electrode plate. In Fig. 6, in the width direction C of the electrode plate, both ends of the second active substance region 2212b are close to an edge of the active substance layer 2212; in Fig. 7, in the width direction C of the electrode plate, one end of the second active substance region 2212b is close to an edge of the active substance layer 2212, while the other end of the second active substance region 2212b is close to the middle part of the active substance layer 2212.

As shown in Fig. 8, the length extension direction of the second active substance region 2212b is the length direction D of the electrode plate.

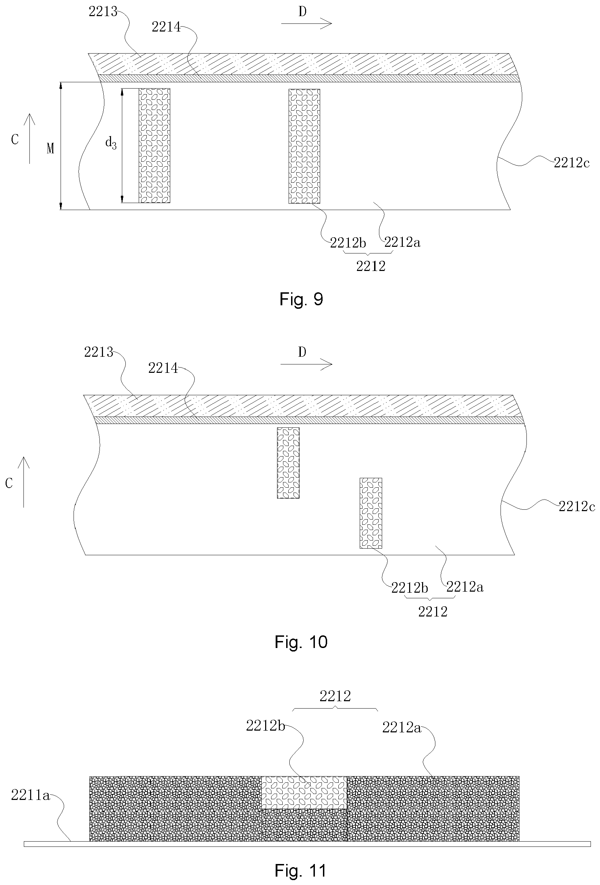

As shown in Figs. 9 and 10, the length extension direction of the second active substance region 2212b is the width direction C of the electrode plate. In Fig. 9, in the width direction C of the electrode plate, both ends of the second active substance region 2212b are close to an edge of the active substance layer 2212; in Fig. 10, in the width direction C of the electrode plate, one end of the second active substance region 2212b is close to an edge of the active substance layer 2212, while the other end of the second active substance region 2212b is close to the middle part of the active substance layer 2212.

The distribution of the active substance layer 2212 in the longitudinal section is not defined in the present disclosure: it is possible to respectively provide one active substance layer 2212 on the surfaces of both sides of the current collector 2211 in the thickness direction, as shown in Fig. 5; and it is also possible to provide one active substance layer 2212 on one of the surfaces of the current collector 2211 in the thickness direction.

The distribution of the second active substance region 2212b in the longitudinal section is not defined in the present disclosure, and the thickness of the second active substance region 2212b may be equal to the thickness of the active substance layer 2212, as shown in Fig. 5. The thickness of the second active substance region 2212b may also be smaller than the thickness of the active substance layer 2212, as shown in Figs. 11 to 13.

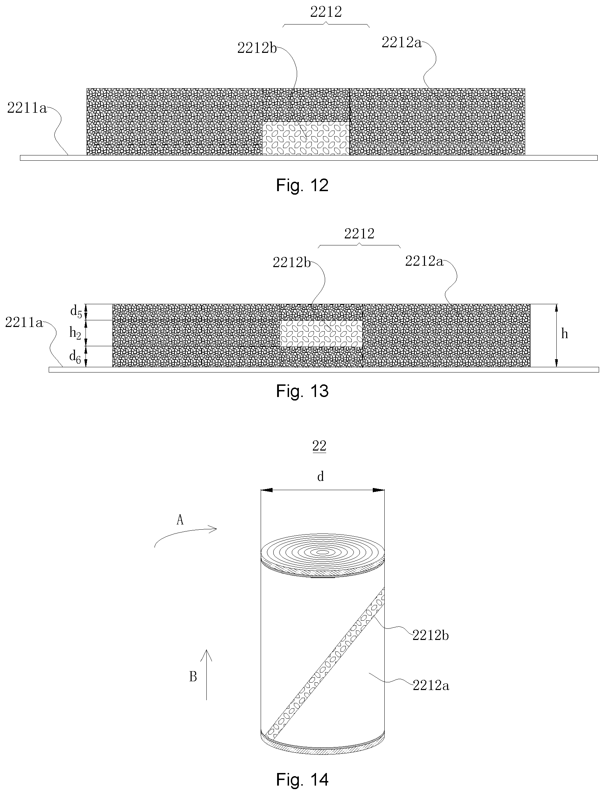

In the above, when the thickness of the second active substance region 2212b is smaller than the thickness of the active substance layer 2212, in the longitudinal section, the second active substance region 2212b can be located on the surface of the active substance layer 2212, as shown in Fig. 11; the second active substance region 2212b can be located at the bottom of the active substance layer 2212, as shown in Fig. 12; and the second active substance region 2212b can be located in the middle part of the active substance layer 2212, as shown in Fig. 13.

In the battery cell, when the electrode assembly 22 is infiltrated by an electrolytic solution, the electrolytic solution infiltrates from both ends of the electrode plate towards the middle part in the width direction C of the electrode plate. Thus, during the infiltration, it is usually difficult to infiltrate the middle region of the electrode plate in the width direction C with the electrolytic solution, which causes an insufficient infiltration efficiency of the electrode plate in the width direction C.

The porosity of the second active substance region 2212b is greater than the porosity of the first active substance region 2212a, the porosity of the first active substance region 2212a can be configured according to commonly known requirements for porosity, and then the porosity of the second active substance region 2212b is configured to be greater than commonly known requirements for porosity.

By configuring a second active substance region 2212b having a relatively greater porosity, the infiltration efficiency of the active substance layer 2212 can be increased. In the preset section 2212c parallel to the preset surface 2211a, since the sectional area of the second active substance region 2212b is smaller than the sectional area of the active substance layer 2212, that is, the second active substance region 2212b is configured to be locally distributed in the transverse section, in other words, in the width direction C of the electrode plate, both a region having a relatively great porosity and a region having a relatively small porosity are present, the infiltration efficiency of the electrode plate in the width direction C can be effectively improved.

According to some embodiments of the present disclosure, optionally, the difference between P₂ and P₁ ranges from 3% to 20%, optionally ranges from 7% to 15%, and further optionally ranges from 10% to 15%.

As an example, the difference between P₂ and P₁ may be e.g., but is not limited to, any value from 3%, 7%, 8%, 9%, 10%, 11%, 12%, 13%, 14%, 15%, and 20%, or any range between any two values.

The difference between P₂ and P₁ is associated with the increase in the infiltration efficiency and with the energy density loss of the electrode plate. If the difference between P₂ and P₁ is relatively small, the infiltration efficiency cannot be increased effectively; if the difference between P₂ and P₁ is relatively great, it would cause relatively great energy density loss of the electrode plate.

A proper difference in porosity between the second active substance region 2212b and the first active substance region 2212a reduces the amount of the energy density loss of the electrode plate as much as possible, while the infiltration efficiency is effectively improved.

According to some embodiments of the present disclosure, optionally, P₁ ranges from 15% to 35%, optionally ranges from 15% to 25%, further optionally ranges from 20% to 25%; and/or P₂ ranges from 20% to 50%, optionally ranges from 20% to 40%, further optionally ranges from 25% to 40%.

As an example, P₁ may be e.g., but is not limited to, any value from 15%, 20%, 21%, 22%, 23%, 24%, 25%, 30%, and 35%, or any range between any two values. P₂ may be e.g., but is not limited to, any value from 20%, 25%, 26%, 27%, 28%, 29%, 30%, 31%, 32%, 33%, 34%, 35%, 36%, 40%, and 50%, or any range between any two values.

The values of P₁ and P₂ are associated with the infiltration efficiency and with the energy density of the electrode plate. If the values of P₁ and P₂ are relatively small, the infiltration efficiency is low and the energy density is high; and if the values of P₁ and P₂ are relatively great, the infiltration efficiency is high and the energy density is low.

By selecting a specific porosity for the second active substance region 2212b and the first active substance region 2212a, the electrode plate is controlled to have a proper energy density, while the infiltration efficiency is ensured.

According to some embodiments of the present disclosure, optionally, the first active substance region 2212a has a compaction density of C₁ and the second active substance region 2212b has a compaction density of C₂, and any one of following conditions (a) to (c) is satisfied: (a) both the first active substance region 2212a and the second active substance region 2212b have an active substance of lithium iron phosphate, and the ratio of C₁ to C₂ ranges from 1.02 to 1.7; optionally, C₁ ranges from 2.3 g/cm³ to 2.7 g/cm³, and C₂ ranges from 1.6 g/cm³ to 2.2 g/cm³; (b) both the first active substance region 2212a and the second active substance region 2212b have an active substance of a ternary cathode material, and the ratio of C₁ to C₂ ranges from 1.02 to 1.5; optionally, C₁ ranges from 3.1 g/cm³ to 3.7 g/cm³, and C₂ ranges from 2.5 g/cm³ to 3 g/cm³; (c) both the first active substance region 2212a and the second active substance region 2212b have an active substance of graphite, and the ratio of C₁ to C₂ ranges from 1.1 to 1.7; optionally, C₁ ranges from 1.3 g/cm³ to 1.8 g/cm³, and C₂ ranges from 1.1 g/cm³ to 1.5 g/cm³.

In the embodiments of the present disclosure, the materials of the second active substance region 2212b and the first active substance region 2212a may be same, or may also be different. When the second active substance region 2212b and the first active substance region 2212a are made of the same material, the manufacturing process is simple.

As an example, for the condition (a), the ratio of C₁ to C₂ may be e.g., but is not limited to, any value from 1.02, 1.1, 1.2, 1.3, 1.4, 1.5, 1.6, and 1.7, or any range between any two values.

The value of C₁ may be e.g., but is not limited to, any value from 2.3 g/cm³, 2.4 g/cm³, 2.5 g/cm³, 2.6 g/cm³, and 2.7 g/cm³, or any range between any two values.

The value of C₂ may be e.g., but is not limited to, any value from 1.6 g/cm³, 1.7 g/cm³, 1.8 g/cm³, 1.9 g/cm³, 2.0 g/cm³, 2.1 g/cm³, and 2.2 g/cm³, or any range between any two values.

As an example, for the condition (b), the ratio of C₁ to C₂ may be e.g., but is not limited to, any value from 1.02, 1.1, 1.2, 1.3, 1.4, and 1.5, or any range between any two values.

The value of C₁ may be e.g., but is not limited to, any value from 3.1 g/cm³, 3.2 g/cm³, 3.3 g/cm³, 3.4 g/cm³, 3.5 g/cm³, 3.6 g/cm³, and 3.7 g/cm³, or any range between any two values.

The value of C₂ may be e.g., but is not limited to, any value from 2.5 g/cm³, 2.6 g/cm³, 2.7 g/cm³, 2.8 g/cm³, 2.9 g/cm³, and 3.0 g/cm³, or any range between any two values.

As an example, for the condition (b), the ratio of C₁ to C₂ may be e.g., but is not limited to, any value from 1.1, 1.2, 1.3, 1.4, 1.5, 1.6, and 1.7, or any range between any two values.

The value of C₁ may be e.g., but is not limited to, any value from 1.3 g/cm³, 1.4 g/cm³, 1.5 g/cm³, 1.6 g/cm³, 1.7 g/cm³, and 1.8 g/cm³, or any range between any two values.

The value of C₂ may be e.g., but is not limited to, any value from 1.1 g/cm³, 1.2 g/cm³, 1.3 g/cm³, 1.4 g/cm³, and 1.5 g/cm³, or any range between any two values.

The compaction density is associated with the porosity. For active substance layers 2212 of different active substance kinds, the compaction density and the porosity satisfy different specific relationships.

By respectively selecting a corresponding specific compaction density for different active substances, it is ensured that the second active substance region 2212b and the first active substance region 2212a have a proper porosity and a difference in porosity, wherein the electrode plate is controlled to have a proper energy density, while the infiltration efficiency is effectively increased.

According to some embodiments of the present disclosure, optionally, at least one of following conditions (d) to (e) is satisfied: (d) S × 2.5% ≤ S₂ ≤ S × 30%; and (e) the active substance layer 2212 has a thickness of h, and the second active substance region 2212b has a thickness of h₂, where h × 30% ≤ h₂ ≤ h × 100%.

As an example, for the condition (d), the value of S₂ may be e.g., but is not limited to, any value from S × 2.5%, S × 5%, S × 10%, S × 15%, S × 20%, S × 25%, and S × 30%, or any range between any two values.

As an example, for the condition (e), the value of h₂ may be e.g., but is not limited to, any value from h × 30%, h × 40%, h × 50%, h × 60%, h × 70%, h × 80%, h × 90%, and h × 100%, or any range between any two values.

S₂ represents the distribution range of the second active substance region 2212b in the transverse section, if S₂ is relatively small, the infiltration efficiency would be affected; and if S₂ is relatively great, the energy density would be affected. h₂ represents the distribution range of the second active substance region 2212b in the longitudinal section, and if h₂ is relatively small, the infiltration efficiency would be affected.

The second active substance region 2212b satisfies a specific area proportion and/or thickness proportion, such that the second active substance region 2212b has a proper distribution proportion, wherein the electrode plate is controlled to have a proper energy density, while the infiltration efficiency is ensured.

According to some embodiments of the present disclosure, optionally, in the width direction C of the electrode plate, the active substance layer 2212 has a size of M, and following condition (f) is satisfied: (f) in the width direction C of the electrode plate, the minimum distance between the second active substance region 2212b and the center of the active substance layer 2212 is d₁, where d₁ ≤ M × 35%.

d₁ ≤ M × 35% represents that in the width direction C, at least a part of the second active substance region 2212b is located in a region of this specific width in the middle part of the active substance layer 2212. When d₁ = 0, it represents that the second active substance region 2212b would reach or pass through the center of the active substance layer 2212 in the width direction C.

In the width direction C of the electrode plate, the minimum distance between the second active substance region 2212b and the center of the active substance layer 2212 is smaller than or equal to a specific standard, such that the second active substance region 2212b has a proper distribution location, hereby effectively increasing the infiltration efficiency.

According to some embodiments of the present disclosure, optionally, in the width direction C of the electrode plate, the active substance layer 2212 has a size of M, and following condition (g) is satisfied: (g) in the width direction C of the electrode plate, the minimum distance between the second active substance region 2212b and an edge of the active substance layer 2212 is d₂, where d₂ ≤ M × 20%.

d₂ ≤ M × 20% represents that in the width direction C, at least a part of the second active substance region 2212b is located in a region of this specific width at the edge of the active substance layer 2212. When d₂ = 0, it represents that the second active substance region 2212b would reach the edge of the active substance layer 2212 in the width direction C.

In the width direction C of the electrode plate, the minimum distance between the second active substance region 2212b and an edge of the active substance layer 2212 is smaller than or equal to a specific standard, such that the second active substance region 2212b has a proper distribution location, hereby effectively increasing the infiltration efficiency.

According to some embodiments of the present disclosure, optionally, in the width direction C of the electrode plate, the active substance layer 2212 has a size of M; there are multiple second active substance regions 2212b, and the multiple second active substance regions 2212b are distributed at intervals along the length direction D of the electrode plate; and at least one of following conditions (h) to (i) is satisfied: (h) in the width direction C of the electrode plate, the minimum distance between the second active substance region 2212b and the center of the active substance layer 2212 is d₁, where d₁ ≤ M × 10%; and (i) in the width direction C of the electrode plate, the distance between both ends of each of the second active substance regions 2212b is d₃, where d₃ ≥ M × 30%.

In the above, each second active substance region 2212b may be arranged to be inclined with respect to the second active substance regions 2212b, as shown in Figs. 6 and 7. Each second active substance region 2212b may also extend along the width direction C of the electrode plate, as shown in Figs. 9 and 10.

d₁ ≤ M × 10% represents that in the width direction C, at least a part of the second active substance region 2212b is located in a region of this specific width in the middle part of the active substance layer 2212. d₃ ≥ M × 30% represents that in the width direction C, the second active substance region 2212b at least satisfies this specific distribution range.

In the width direction C of the electrode plate, the minimum distance between the second active substance region 2212b and the center of the active substance layer 2212 is controlled to be smaller than or equal to a specific standard, and/or the distance between both ends of the second active substance region 2212b is controlled to be greater than or equal to a specific standard, such that the multiple second active substance regions 2212b distributed at intervals along the length direction D of the electrode plate have proper distribution locations, hereby effectively increasing the infiltration efficiency.

According to some embodiments of the present disclosure, optionally, in the width direction C of the electrode plate, the active substance layer 2212 has a size of M; and there are multiple second active substance regions 2212b, and the multiple second active substance regions 2212b are distributed at intervals along the width direction C of the electrode plate; in the width direction C of the electrode plate, the spacing between two adjacent second active substance regions 2212b is d₄, where d₄ ≤ M × 20%.

In the above, each second active substance region 2212b may be arranged to be inclined with respect to the second active substance regions 2212b, as shown in Figs. 6 and 7. Each second active substance region 2212b may also extend along the length direction D of the electrode plate, as shown in Fig. 8.

In the width direction C of the electrode plate, the distance between two adjacent second active substance regions 2212b is controlled to be smaller than or equal to a specific standard, such that the multiple second active substance regions 2212b distributed at intervals along the width direction C of the electrode plate have proper distribution locations, hereby effectively increasing the infiltration efficiency.

According to some embodiments of the present disclosure, optionally, the active substance layer 2212 has a thickness of h, and the second active substance region 2212b has a thickness of h₂, where h × 30% ≤ h₂ ≤ h × 60%; and the distance from the second active substance region 2212b to the surface of the active substance layer 2212 is d₅, and the distance from the active substance layer 2212 to the preset surface 2211a is d₆, where d₅ < de.

As an example, d₅ = 0.

In the above, d₅ < d₆ represents that in the longitudinal section, the second active substance region 2212b is arranged to be closer to the surface of the active substance layer 2212. d₅ = 0 represents that in the longitudinal section, the second active substance region 2212b is located on the surface of the active substance layer 2212, as shown in Fig. 11.

The second active substance region 2212b occupies partial region of the active substance layer 2212 in the thickness direction, wherein the electrode plate is controlled to have a proper energy density, while the infiltration efficiency is effectively increased. Meanwhile, it is controlled that the second active substance region 2212b is arranged to be closer to the surface of the active substance layer 2212, and the function of the second active substance for improving the infiltration efficiency can hereby be better exploited.

According to some embodiments of the present disclosure, further referring to Figs. 14 to 17, the present disclosure further provides an electrode assembly 22, comprising: a positive electrode plate 221, a separator 223, and a negative electrode plate 222, wherein at least one from the positive electrode plate 221 and the negative electrode plate 222 is an electrode plate according to any of the foregoing solutions.

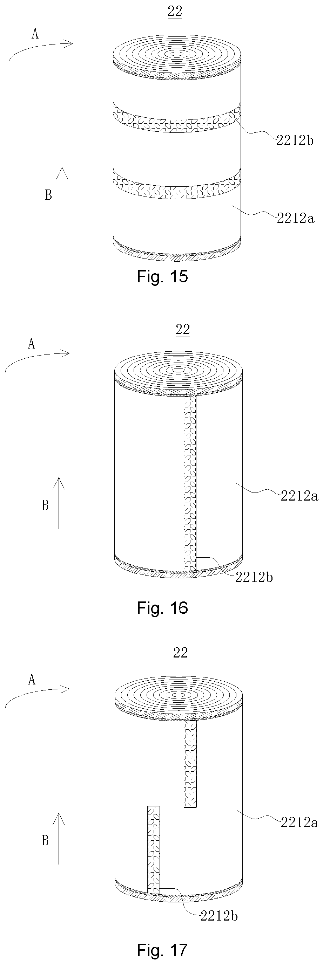

In the above, Fig. 14 shows an electrode assembly 22 containing an electrode plate as shown in Fig. 6; Fig. 15 shows an electrode assembly 22 containing an electrode plate as shown in Fig. 8; Fig. 16 shows an electrode assembly 22 containing an electrode plate as shown in Fig. 9; and Fig. 17 shows an electrode assembly 22 containing an electrode plate as shown in Fig. 10.

The phenomenon of insufficient infiltration efficiency generally occurs by the positive electrode plate 221, especially a positive electrode plate 221 having fine-grained lithium iron phosphate as active material, since the positive electrode plate 221 generally has a relatively great compaction density, causing generally a relatively small porosity of the positive electrode plate 221. On this basis, in the electrode assembly 22, an exemplary positive electrode plate 221 thereof is an electrode plate according to any of the foregoing solutions, and the negative electrode plate 222 may be an electrode plate according to any of the foregoing solutions, but the negative electrode plate 222 may also be a structure, in which the active substance layer 2212 has a consistent overall porosity.

According to some embodiments of the present disclosure, optionally, the electrode assembly 22 is of a winding structure, the width direction C of the electrode plate is identical with the axial direction B of the electrode assembly 22, and the length direction D of the electrode plate is identical with the winding direction A of the electrode assembly 22; and the electrode assembly 22 has a diameter of d, and in the winding direction A of the electrode assembly 22, each region having an arc length of πd/4 has at least a part of the second active substance region 2212b.

Each region having an arc length of πD/4 has at least a part of the second active substance region 2212b, such that the distribution spacing of the second active substance regions 2212b in the winding direction A of the electrode assembly 22 is smaller than or equal to a specific standard, hereby ensuring a relatively good infiltration effect of the electrode assembly 22.

According to some embodiments of the present disclosure, the present disclosure further provides a battery cell, comprising a housing and an electrode assembly 22 according to any of the foregoing solutions; and the electrode assembly 22 is accommodated in the housing.

According to some embodiments of the present disclosure, the present disclosure further provides a battery, comprising a box body and a battery cell according to any of the foregoing solutions; and the battery cell is accommodated in the box body.

According to some embodiments of the present disclosure, the present disclosure further provides an electric appliance, comprising a battery according to any of the foregoing solutions.

In the following contents, a preparation method for an electrode plate according to an embodiment of the present disclosure will be described exemplarily.

A first preparation method for an electrode plate according to any of the foregoing solutions, which is used, for example, for preparing an active substance layer 2212 of h₂ = h × 100%, comprises: coating a relatively lighter weight of slurry in partial region during a slurry coating phase, and then cold-pressing the entire slurry coating into a structure having a consistent thickness. The entire coating is the active substance layer 2212, the coating in the region coated with a small amount of slurry is the second active substance region 2212b, and the remaining region is the first active substance region 2212a.

In the above, the coating of a relatively lighter weight of slurry in partial region can be realized by providing a protrusion structure on a coating back roll or by providing a slurry blocking structure on a shim.

A second preparation method for an electrode plate according to any of the foregoing solutions, which is used, for example, for preparing an active substance layer 2212 of h₂ = h × 100%, comprises: thinning the coating in partial region by means of laser or the like after the completion of the slurry coating phase, and then cold-pressing the entire slurry coating into a structure having a consistent thickness. The entire coating is the active substance layer 2212, the coating in the laser-thinned region is the second active substance region 2212b, and the remaining region is the first active substance region 2212a.

A third preparation method for an electrode plate according to any of the foregoing solutions, which is used, for example, for preparing an active substance layer 2212 of h₂ = h × 100%, comprises: adopting a blooming roller with partial region etched after the completion of the slurry coating phase, and then cold-pressing the entire slurry coating into a structure having a consistent thickness by adopting a flat roller for rolling. The entire coating is the active substance layer 2212, the coating corresponding to the region etched by the blooming roller is the second active substance region 2212b, and the remaining region is the first active substance region 2212a.

A fourth preparation method for an electrode plate according to any of the foregoing solutions, which is used, for example, for preparing an active substance layer 2212 of h₂ < h × 100%, comprises: adopting the mode of multiple coating, wherein in a coating layer required to form a second active substance region 2212b, different slurries are used in different regions, such that a relatively lighter weight of slurry is coated in partial region; and then cold-pressing the entire slurry coating into a structure having a consistent thickness after the completion of the multiple coating. The entire coating is the active substance layer 2212, the coating coated with a small amount of slurry is the second active substance region 2212b, and the remaining region is the first active substance region 2212a.

Some specific examples are enumerated below for better description of the present disclosure.

Preparation of a positive electrode plate: An active material, a conductive agent (super P carbon black), polyvinylidene fluoride (PVDF), and N-methylpyrrolidone (NMP) were mixed according to a mass ratio of 92:3:5:100, and a slurry was prepared after stirring for 12 h at a speed of 800 r/min. The slurry was applied onto an aluminum foil by extrusion coating, and the back roll used for coating was provided in the middle part with a protrusion structure (for forming a second active substance region). A positive electrode plate was obtained after baking, rolling, and slitting. In the above, the active material was lithium iron phosphate.

Preparation of a negative electrode plate: An active material, a conductive agent (super P carbon black), sodium carboxymethyl cellulose (CMC), styrene butadiene rubber (SBR), and deionized water were mixed according to a mass ratio of 90:2.5:2.5:5:100, a slurry was prepared after stirring for 12 h at a speed of 800 r/min, the slurry was applied onto a copper foil by extrusion coating, and a negative electrode plate was obtained after baking, rolling, and slitting.

Preparation of an electrolytic solution: A mixed solvent was obtained by homogeneously mixing ethylene carbonate (EC), dimethyl carbonate (DMC), and ethyl methyl carbonate (EMC) according to a mass ratio of 25:20:55 in a glove box of argon atmosphere having a moisture content < 10 ppm; sufficiently dried lithium hexafluorophosphate (LiPF₆) was then dissolved in the above mixed solvent, and an electrolytic solution was obtained after stirring evenly. In the above, the concentration of lithium hexafluorophosphate (LiPF₆) was 1.2 mol/L.

Assembly: The foregoing positive electrode plate, a separator, and the negative electrode plate were assembled sequentially and were then wound into a cylindrical winding structure along a winding direction, and a battery cell was obtained by laying aside and infiltrating after the addition of the foregoing electrolytic solution and then sealing.

In the above, a polyethylene membrane was used as the separator.

Parametric conditions for battery cells according to the respective examples and the comparative example are shown in Table 1.

**Table 1**

| | Cell | Positive Electrode Plate | | | | | | | | | |
|---|---|---|---|---|---|---|---|---|---|---|---|
| | d (mm) | M (mm) | C₁ (g/cm³) | C₂ (g/cm³) | C₁/C₂ | surface density (mg/1540.25mm²) | P₁ (%) | P₂ (%) | P₂-P₁ | location of the second active substance region | h₂/h (%) |
| Example 1 | 60 | 400 | 2.4 | 2.04 | 1.18 | 355 | 25 | 34 | 9 | surface layer | 38 |
| Example 2 | | | 2.42 | 2.02 | 1.20 | 355 | 24 | 36 | 12 | surface layer | 49 |
| Example 3 | | | 2.45 | 2.11 | 1.16 | 380 | 23 | 31 | 8 | surface layer | 48 |
| Example 4 | | | 2.42 | 2.02 | 1.20 | 355 | 24 | 36 | 12 | middle layer | 25 |
| Example 5 | | | 2.42 | 2.02 | 1.20 | 355 | 24 | 36 | 12 | bottom layer | 49 |
| Example 6 | | | 2.45 | 2.1 | 1.17 | 380 | 24 | 32 | 8 | fully | 100 |
| Example 7 | | | 2.5 | 1.95 | 1.28 | 380 | 23 | 36 | 13 | fully | 100 |
| Example 8 | | | 2.55 | 2.18 | 1.17 | 405 | 23 | 31 | 8 | fully | 100 |
| Example 9 | | | 2.6 | 1.88 | 1.38 | 405 | 22 | 36.5 | 14.5 | fully | 100 |
| Example 10 | | | 2.6 | 1.88 | 1.38 | 405 | 22 | 26.5 | 14.5 | surface layer | 52 |
| Example 11 | | | 2.6 | 1.88 | 1.38 | 405 | 22 | 26.5 | 14.5 | bottom layer | 50 |
| Example 12 | | | 2.65 | 1.96 | 1.35 | 405 | 22 | 36 | 14 | fully | 100 |
| Comparative example | | | 2.45 | 2.45 | 1.00 | 355 | 24 | 24 | / | / | / |

In the above, the phrase "location of the second active substance region" refers to the location of the second active substance region in the longitudinal section in the thickness direction of the active substance layer.

In Examples 1 to 6, the structure of the positive electrode plate in the transverse section is shown in Fig. 8. In the above, there were 6 second active substance regions, which were distributed uniformly along the width direction of the electrode plate; d₂ was 50 mm on both sides, d₃ was 20 mm, d₄ was 36 mm, and S₂ was S × 30%.

In Examples 7 to 12, the structure of the positive electrode plate in the transverse section is shown in Fig. 9. In the above, d₂ was 50 mm on both sides, d₃ was 300 mm; in the length direction of the electrode plate, each second active substance region had a size of 10 mm, and the distance between the centers of two adjacent second active substance regions was 40 mm; and S₂ was S × 18.75%.

The duration for laying aside and infiltrating was recorded.

Data of cycle life were obtained by activating battery cells through chemical formation in the light of charging at 0.1C, and performing capacity tests in the light of charging and discharging at 1C, then performing cycle tests in the light of a charging and discharging process at 1C, and performing charging and discharging during the cycles in the light of 100% electric quantity of the battery cells.

In the above, the capacity loss rate of battery cells according to the respective examples were calculated with the comparative example as reference; and the data of cycle life were represented by the cycling capacity retention ratio after 300 cycles.

Performance data of battery cells according to the respective examples and the comparative example are shown in Table 2.

**Table 2**

| | infiltration duration (hour) | cycling capacity retention ratio after 300 cycles (%) | cell capacity loss rate (%) |
|---|---|---|---|
| Example 1 | 2 | 93 | 2 |
| Example 2 | 2 | 96 | 2.4 |
| Example 3 | 2.5 | 93 | 1.7 |
| Example 4 | 2.7 | 92 | 0.8 |
| Example 5 | 2.8 | 92 | 2.2 |
| Example 6 | 1.5 | 97 | 2.2 |
| Example 7 | 3 | 91 | 1.1 |
| Example 8 | 3.5 | 90 | 0.8 |
| Example 9 | 3 | 95 | 1.7 |
| Example 10 | 3.2 | 91 | 0.6 |
| Example 11 | 3.4 | 91 | 0.6 |
| Example 12 | 3 | 91 | 1.1 |
| Comparative example | 5 | 88 | 0 |

According to Tables 1 and 2, it can be determined:
In Examples 1 to 12, the positive electrode plate was so configured that the porosity of the second active substance region was greater than the porosity of the first active substance region. In the comparative example, the positive electrode plate was so configured that the porosity of the second active substance region was equal to the porosity of the first active substance region.

Through the comparison respectively between Examples 1 to 12 and the comparative example, it is showed that the cell capacity loss rate was low; the cycling capacity retention ratio was high, such that the cycle life was improved; the infiltration duration was significantly reduced, indicating that the infiltration efficiency was increased. It indicates that by providing a second active substance region having a relatively great porosity, the infiltration efficiency can be effectively increased and the cycle life is improved, and influences on the cell capacity are relatively slight.

In Examples 1 to 3, the difference between P₂ and P₁ in Example 2 was in the range from 10% to 15%, but the differences between P₂ and P₁ in Examples 1 and 3 were not in the range from 10% to 15%. In Examples 7 to 9 and in Example 12, the differences between P₂ and P₁ in Examples 7, 9, and 12 were in the range from 10% to 15%, but the difference between P₂ and P₁ in Example 8 was not in the range from 10% to 15%.

In the comparison between Example 2 and Example 1, the cycling capacity retention ratio was higher in Example 2. In the comparison between Example 2 and Example 3, the cycling capacity retention ratio was higher and the infiltration duration was shorter in Example 2. Compared with Example 8, all of Example 7, Example 9, and Example 12 showed a higher cycling capacity retention ratio and shorter infiltration duration. It indicates that when the difference between P₂ and P₁ is in the range from 10% to 15%, the second active substance region can better increase the infiltration efficiency and improve the cycle life.

In Examples 2 and 5, the second active substance region was located on the surface of the active substance layer in Example 2, while in Example 5, the second active substance region was located at the bottom of the active substance layer. In Examples 9 to 11, the second active substance region was distributed in the entire thickness direction of the active substance layer in Example 9, the second active substance region was located on the surface of the active substance layer in Example 10, and the second active substance region was located at the bottom of the active substance layer in Example 11.

Compared with Example 5, the cycling capacity retention ratio was higher in Example 2, and the infiltration duration was shorter. It indicates that the infiltration efficiency can be better increased and the cycle life can be improved by arranging the second active substance region to be close to the surface of the active substance layer. In Examples 9 to 11, the infiltration duration was increased gradually, indicating: a better infiltration efficiency is obtained when the second active substance region is distributed in the entire thickness direction of the active substance layer; when the second active substance region is distributed partially in the active substance layer in the thickness direction of the active substance layer, the infiltration efficiency can be better increased and the cycle life can be improved by arranging the second active substance region to be close to the surface of the active substance layer.

## Claims

1. An electrode plate, **characterized by** comprising: a current collector, and an active substance layer disposed on a surface of at least one side of the current collector, wherein
the active substance layer has a first active substance region and a second active substance region; in a preset section, the second active substance region has a sectional area of S₂, and the active substance layer has a sectional area of S, where S₂ < S; a surface, where the active substance layer is located in the current collector, is a preset surface, and the preset section is parallel to the preset surface and passes through the second active substance region;
the first active substance region has a porosity of P₁, and the second active substance region has a porosity of P₂, where P₁ < P₂; and
pores in the first active substance region and in the second active substance region all have a pore size ≤ 1 µm.

2. The electrode plate according to claim 1, wherein a difference between P₂ and P₁ ranges from 3% to 20%, optionally ranges from 7% to 15%, and further optionally ranges from 10% to 15%.

3. The electrode plate according to claim 1 or 2, wherein
P₁ ranges from 15% to 35%, optionally ranges from 15% to 25%, further optionally ranges from 20% to 25%; and/or P₂ ranges from 20% to 50%, optionally ranges from 20% to 40%, further optionally ranges from 25% to 40%.

4. The electrode plate according to any one of claims 1 to 3, wherein the first active substance region has a compaction density of C₁ and the second active substance region has a compaction density of C₂, and any one of following conditions (a) to (c) is satisfied:
(a) both the first active substance region and the second active substance region have an active substance of lithium iron phosphate, and a ratio of C₁ to C₂ ranges from 1.02 to 1.7;
optionally, C₁ ranges from 2.3 g/cm³ to 2.7 g/cm³, and C₂ ranges from 1.6 g/cm³ to 2.2 g/cm³;
(b) both the first active substance region and the second active substance region have an active substance of a ternary cathode material, and a ratio of C₁ to C₂ ranges from 1.02 to 1.5;
optionally, C₁ ranges from 3.1 g/cm³ to 3.7 g/cm³, and C₂ ranges from 2.5 g/cm³ to 3 g/cm³;
(c) both the first active substance region and the second active substance region have an active substance of graphite, and a ratio of C₁ to C₂ ranges from 1.1 to 1.7;
optionally, C₁ ranges from 1.3 g/cm³ to 1.8 g/cm³, and C₂ ranges from 1.1 g/cm³ to 1.5 g/cm³.

5. The electrode plate according to any one of claims 1 to 4, wherein at least one of following conditions (d) to (e) is satisfied:
(d) S × 2.5% ≤ S₂ ≤ S × 30%; and
(e) the active substance layer has a thickness of h, and the second active substance region has a thickness of h₂, where h × 30% ≤ h₂ ≤ h × 100%.

6. The electrode plate according to any one of claims 1 to 5, wherein in a width direction of the electrode plate, the active substance layer has a size of M, and following condition (f) is satisfied:
(f) in the width direction of the electrode plate, a minimum distance between the second active substance region and a center of the active substance layer is d₁, where d₁ ≤ M × 35%.

7. The electrode plate according to any one of claims 1 to 6, wherein in a width direction of the electrode plate, the active substance layer has a size of M, and following condition (g) is satisfied:
(g) in the width direction of the electrode plate, a minimum distance between the second active substance region and an edge of the active substance layer is d₂, where d₂ ≤ M × 20%.

8. The electrode plate according to any one of claims 1 to 7, wherein in a width direction of the electrode plate, the active substance layer has a size of M; multiple second active substance regions are provided, and the multiple second active substance regions are distributed at intervals along a length direction of the electrode plate; and at least one of following conditions (h) to (i) is satisfied:
(h) in a width direction of the electrode plate, a minimum distance between the second active substance region and a center of the active substance layer is d₁, where d₁ ≤ M × 10%; and
(i) in the width direction of the electrode plate, a distance between both ends of each second active substance region is d₃, where d₃ ≥ M × 30%.

9. The electrode plate according to any one of claims 1 to 8, wherein in a width direction of the electrode plate, the active substance layer has a size of M; and multiple second active substance regions are provided, and the multiple second active substance regions are distributed at intervals along the width direction of the electrode plate; and
in the width direction of the electrode plate, a spacing between two adjacent second active substance regions is d₄, where d₄ ≤ M × 20%.

10. The electrode plate according to any one of claims 1 to 9, wherein the active substance layer has a thickness of h, and the second active substance region has a thickness of h₂, where h × 30% ≤ h₂ ≤ h × 60%; and a distance from the second active substance region to a surface of the active substance layer is d₅, and a distance from the active substance layer to the preset surface is d₆, where d₅ < d₆.

11. An electrode assembly, **characterized by** comprising: a positive electrode plate, a separator, and a negative electrode plate, wherein at least one from the positive electrode plate and the negative electrode plate is the electrode plate according to any one of claims 1 to 10.

12. The electrode assembly according to claim 11, wherein the electrode assembly is of a winding structure, a width direction of the electrode plate is identical with an axial direction of the electrode assembly, and a length direction of the electrode plate is identical with a winding direction of the electrode assembly; and
the electrode assembly has a diameter of d, and in the winding direction of the electrode assembly, each region having an arc length of πd/4 has at least a part of the second active substance region.

13. A battery cell, **characterized by** comprising a housing and the electrode assembly according to claim 11 or 12, wherein
the electrode assembly is accommodated in the housing.

14. A battery, **characterized by** comprising a box body and the battery cell according to claim 13, wherein
the battery cell is accommodated in the box body.

15. An electric appliance, **characterized by** comprising the battery according to claim 14.
